# EUROPÄISCHE PATENTSCHRIFT

(11) **EP 3 865 346 B1**
(45) Veröffentlichungstag und Bekanntmachung des Hinweises auf die Patenterteilung: **30.04.2025**
(21) Anmeldenummer: 21156720.1
(22) Anmeldetag: 11.02.2021
(51) Int. Cl.: B60P 3/39

(54) **MULTIFUNKTIONSVORRICHTUNG FÜR EIN CAMPINGFAHRZEUG**
MULTIFUNCTION DEVICE FOR A CAMPING VEHICLE
DISPOSITIF MULTIFONCTION POUR UN CAMPING-CAR

(30) Priorität: 11.02.2020 DE 102020103524
(43) Veröffentlichungstag der Anmeldung: 18.08.2021
(73) Patentinhaber: Erwin Hymer Group SE, 88339 Bad Waldsee (DE)
(72) Erfinder: Kaiser, Ria, 21077 Hamburg (DE); Kasten, Ole, 21680 Stade (DE); Weltjen, Martin, 21726 Oldendorf (DE); Wulf, Mathis, 21680 Stade (DE)
(74) Vertreter: Müller Schupfner & Partner Patent- und Rechtsanwaltspartnerschaft mbB (Muc)

(56) Entgegenhaltungen:
- EP-A1- 3 778 301
- EP-A2- 2 767 436
- WO-A1-2017/201555
- WO-A1-2018/020308
- DE-A1- 102009 040 891
- DE-U1- 202018 103 492

## Beschreibung

Die Erfindung betrifft eine Multifunktionsvorrichtung für ein Campingfahrzeug.

Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil oder Freizeitmobil. Ein Wohnwagen kann zum Beispiel alternativ als Caravan oder Campinganhänger bezeichnet werden. Campingfahrzeuge werden alternativ auch Freizeitfahrzeugen genannt.

Unter einer Multifunktionsvorrichtung für ein Campingfahrzeug wird vorliegend eine Vorrichtung verstanden, welche im Inneren des Campingfahrzeugs die Funktionen einer Liege, eines Bettes, eines Tisches und/oder einer Ablage erfüllen kann.

Im Stand der Technik sind aus dem Wassersportbereich aufblasbare (engl: inflatable) SUP (engl.: Stand Up Paddling)-Bretter bekannt, welche auch iSUP-Bretter oder iSUP-Boards genannt werden. Diese sind in verschiedenen Formen und Funktionen erhältlich, z.B. kann man diese zum Stehpaddeln oder als Schwimmplattform verwenden.

Es sind im Stand der Technik auch verschiedene Befestigungsmöglichkeiten bei iSUPs bekannt, mithilfe deren man unterschiedliche Gegenstände an einem iSUP befestigen kann. Es gibt z.B. Stoffaufkleber, an denen Metallringe befestigt sind, welche auf eine Oberfläche eines iSUP-Bretts geklebt werden können.

Die sogenannte Dropstitch-Technik oder -Konstruktion ist eine wichtige Voraussetzung für solche iSUP-Bretter, die formstabil sind. Das Prinzip der Drop-Stitch-Konstruktion beruht darauf, die Decken- und Bodeninnenseiten des Boards oder allgemein eines aufblasbaren Elements mit vertikalen Verbindungsfasern zu verknüpfen und unter hohem Innendruck dadurch in der gewünschten Form zu halten. So entsteht ein Gewebe, das durch eine große Anzahl an Verknotungen äußerst reißfest und formstabil sowie in aufgeblasenem Zustand sehr steif ist und sehr hohen Belastungen standhält, dabei aber dennoch im nicht aufgepumpten Zustand kompakt zusammenlegbar ist. Moderne SUP-Boards mit einem Drop-Stitch-Kern weisen einen Innendruck von 15 bis 25 psi auf, was in SI-Einheiten 1,03 bar bis 1,72 bar entspricht. Bei unterschiedlichen Brettern sind verschiedene Lagen von Drop-Stitch-Gewebe mit PVC unterschiedlicher Qualitäten umklebt und vulkanisiert. Die Oberseite wird üblicherweise mit einem Deckpad aus Ethylen-Vinylacetat-Copolymer (EVAC oder veraltet EVA) beklebt, um die Rutschfestigkeit des Brettes zu erhöhen.

Bei der Dropstitchtechnik werden mit Fasern die Begrenzungsflächen eines aufblasbaren Elements untereinander verbunden und in einem definierten Abstand gehalten, beispielsweise durch Polyesterfasern bei den zuvor beschriebenen SUP-Brettern. Es ist dabei auch möglich, die Fasern nicht in das Gewebe einzuknüpfen, sondern mit diesem zu verkleben oder allein durch Klebefäden oder Kunststofffäden die Verbindung der Begrenzungsflächen zu bewirken. Nachteilig hieran ist, dass dies zwar eine vereinfachte Herstellung ermöglicht, jedoch auch in nicht aufgepumptem Zustand zu einer relativ hohen Steifigkeit führt.

Eine weitere Möglichkeit besteht daher darin, ein sehr leichtes und hochfestes Gewebe zu verwenden, wie beispielsweise Polyamidgewebe, die als Bänder oder Streifen die Begrenzungsflächen verbinden und mit diesen an ihren Enden verwebt sind. Bevorzugt sind die Begrenzungsflächen dabei aus demselben Gewebe. Dies ist für Airbags für die Form sicherstellende Haltebänder bekannt und mit einer solchen Technik lassen sich in entleertem Zustand auf kleinen Raum zusammenlegbare Aufblaselemente herstellen. Durch eine Vielzahl solcher eingewebter Bänder lässt sich ein in aufgeblasenem Zustand ähnlich steifes Brett oder allgemein Aufblaselement erzeugen, wie mit der Dropstitchtechnik.

Sowohl die Dropstitchtechnik einschließlich der Technik der iSUP wie auch die zuvor beschriebene Technik eingewebter Bänder sollen zusammengefasst im Folgenden als Innenzugelement-versteiftes Brett bzw. Aufblaselement bezeichnet werden.

Ferner sind in der Freizeitindustrie verstellbare Hubbetten mit festen Rahmen und Lattenrosten bekannt, mit denen ein variabler Schlafraum generiert werden kann.

Weiterhin ist im Stand der Technik bekannt, Sitzgruppen so zu gestalten, dass diese zu einem Bett umfunktioniert werden können.

DE 10 2009 04891 A1 beschreibt ein aufblasbares Luftbett, dass eine Wickelvorrichtung und eine aufblasbare Matratze umfasst. Die Matratze ist im nicht aufgeblasenen Zu-stand auf die Wickelvorrichtung aufwickelbar.

WO 2017/201555 A1 beschreibt ein Zelt mit einem Traggerüst, einer Zelthaut sowie einem Zeltboden. Der Zeltboden ist von einem aufblasbaren, im aufgeblasenen Zustand plattenartigen Körper gebildet, dessen Deck- und Bodenlage aus einem flexiblen Material besteht und durch eine Vielzahl von Verbindungsfäden oder -fasern miteinander verbunden sind.

Eine Aufgabe der vorliegenden Erfindung liegt darin, den Innenraum eines Campingfahrzeugs praktischer und flexibler zu gestalten. Es ist insbesondere eine Aufgabe der Erfindung, eine Multifunktionsvorrichtung für ein Campingfahrzeug bereitzustellen, welche schnell und einfach aufgebaut und/ oder verstaut werden kann.

Diese Aufgabe wird durch eine Multifunktionsvorrichtung mit den Merkmalen des unabhängigen Patentanspruchs 1 gelöst. Vorteilhafte Weiterbildungen der Erfindung sind in den Unteransprüchen angegeben.

Unter einer Multifunktionsfläche wird vorliegend eine Liegefläche, eine Tischfläche, eine Bettoberfläche, eine Ablagefläche und/oder eine Arbeitsfläche verstanden.

Alternativ kann die Aufgabe der Erfindung ebenfalls durch eine verstaubare Multifunktionsvorrichtung gelöst werden, bei der das Innenzugelement-versteifte -Brett durch eine aufblasbare Struktur ersetzt ist, welche im aufgeblasenen Zustand eine vorgegebene Tragfähigkeit und bevorzugt eine vorgegebene Formstabilität aufweist. Vorliegend wird unter dem Begriff Tragfähigkeit eine spezifische Tragfähigkeit verstanden, d. h. eine Tragfähigkeit, welche auf das Gewicht bezogen ist. Diese spezifische Tragfähigkeit hängt bei Innenzugelement-versteiften Aufblaselementen, Brettern sowie iSUP-Brettern oder allgemein bei aufblasbaren Strukturen vom Innendruck ab.

Bevorzugt weist die aufblasbare Struktur im aufgeblasenen Zustand die Form eines Brettes auf.

Ein Kerngedanke der Erfindung besteht darin, dass ein Innenzugelement-versteiftes Brett, insbesondere eines mit der Technik eines iSUP-Bretts, nicht nur im Wassersportbereich verwendet werden kann, sondern insbesondere bei Campingfahrzeugen als aufblasbare und gut verstaubare Matratze dienen kann.

Gemäß einer bevorzugten Ausführungsform ist die Multifunktionsfläche der Multifunktionsvorrichtung eine Liegefläche, eine Tischfläche, eine Bettoberfläche, eine Ablagefläche und/oder eine Arbeitsfläche. Hierdurch wird vorteilhafterweise erreicht, dass die Multifunktionsvorrichtung in dem Campingfahrzeug unter anderem als Matratze oder als harte Tischoberfläche verwendbar ist.

Erfindungsgemäß weist die Verstaueinheit ein Profil auf oder ist ein solches. Hierbei wird unter dem Begriff Profil ein längliches Bauteil unbestimmten Querschnitts verstanden. Bevorzugt weist das Profil einen runden Querschnitt auf. Bevorzugt ist das Profil ein Rohr, eine Stange, ein Balken eine oder Leiste. Bevorzugt ist das Material des Profils ein Metall. Alternativ kann das Material ein Kunststoff sein. Das Profil ist geeignet, dass das luftleere Innenzugelement-versteifte-Brett um das Profil gewickelt werden kann. Die Länge des Profils ist bevorzugt länger als eine Dimension des Innenzugelement-versteiften-Bretts.

Gemäß noch einer weiteren, bevorzugten Ausführungsform weist die Multifunktionsvorrichtung ferner eine Halterungsvorrichtung zur Halterung des Innenzugelement-versteiften-Bretts im aufgeblasenen Zustand auf. Bevorzugt werden sowohl das Profil der Verstaueinheit als auch die Halterungsvorrichtung verwendet, um das Innenzugelement-versteiften-Brett im aufgeblasenen Zustand zu halten. Die Halterungsvorrichtung kann bevorzugt ebenfalls ein Profil sein. Alternativ oder zusätzlich kann die Haltungsvorrichtung auch eine andere Form oder Konstruktion aufweisen. Hierbei kann die Haltungsvorrichtung zur Halterung von unten unterstützt werden oder von oben gehaltert werden, d. h. aufgehängt sein.

Somit ist dem Fachmann klar, dass die Verstaueinheit nicht nur dem Verstauen des luftleeren Innenzugelement-versteiften-Bretts dient, sondern ebenfalls dem Haltern des aufgeblasenen Innenzugelement-versteiften-Bretts dienen kann.

Erfindungsgemäß ist im verstauten Zustand das luftleere Innenzugelement-versteifte-Brett um das Profil gewickelt. Hierdurch wird vorteilhafterweise erreicht, dass das luftleere Innenzugelement-versteifte-Brett platzsparend verstaut werden kann. Weiter bevorzugt wird das Profil mit dem aufgewickelten Innenzugelement-versteifte-Brett sodann in einer Verstauposition angeordnet.

Es ist weiterhin bevorzugt, dass das aufgeblasene Innenzugelement-versteifte-Brett im Nutzzustand von der Verstauvorrichtung und der Halterungsvorrichtung gehaltert wird. Dem Fachmann ist klar, dass in diesem Zustand, d. h. im Nutzzustand, die Multifunktionsfläche der Multifunktionsvorrichtung genutzt werden kann. Bei einem luftleeren Innenzugelement-versteiften-Brett werden die Multifunktionsflächen in der Regel nicht genutzt.

Gemäß einer bevorzugten Ausführungsform weist die Verstaueinheit einen Einrollmechanismus auf. Der Einrollmechanismus weist bevorzugt einen Federmechanismus und / oder einen Motor auf. Hierdurch kann das luftleere Innenzugelement-versteifte-Brett vorteilhafterweise auf einfache Art und Weise auf die Verstaueinheit gewickelt werden. Bevorzugt ist der Einrollmechanismus arretierbar.

Gemäß einer weiteren Ausführungsform weist die Verstaueinheit eine Hebe-Senkvorrichtung zum Heben und/oder Absenken der Verstaueinheit auf. Die Hebe-Senkvorrichtung kann eine Hubkinematik eines Hubbetts sein. Z.B. kann die Hebe-Senkvorrichtung ein Profil aufweisen, welches mithilfe zweier an den Enden des Profils befestigter Seile oder Bänder in der Höhe verstellbar ist.

Die Verstaueinheit ist bevorzugt so ausgeführt und eingerichtet ist, dass die Verstaueinheit im verstauten Zustand mit einem Aufbau des Campingfahrzeugs fest verbunden ist. In diesem Zustand trägt das Profil bevorzugt zur Strukturintegrität des Aufbaus und Sicherheitskonzept des Fahrzeugs bei, indem es in diesem passiven Zustand fest mit dem Aufbau verbunden ist. Dies kann z.B. durch ein Einrasten des Profils an einer vorgegebenen Verstauposition erreicht werden.

Erfindungsgemäß ist die Verstaueinheit in ein im Inneren des Campingfahrzeugs angeordnetes Möbelstück oder einem Möbelaufbau, z.B. einer Sitzgruppe, insbesondere Längssitzgruppe, integriert. Es ist z.B. denkbar, dass die Verstaueinheit mit dem luftleeren Innenzugelement-versteiften-Brett im verstauten Zustand sich im Inneren eines Möbelaufbaus befindet. Der Nutzzustand sowie die Nutzposition kann erreicht werden, indem eine Klappe im Möbelaufbau geöffnet wird und das Innenzugelement-versteiften-Brett manuell oder automatisch abgewickelt und anschließend manuell oder automatisch aufgepumpt wird.

Gemäß einer anderen, bevorzugten Ausführungsform weist die Multifunktionsvorrichtung ferner einen Kompressor zum Aufblasen/Entleeren des Innenzugelement-versteiften-Bretts auf. Der Kompressor ist bevorzugt in das Campingfahrzeug integriert und ermöglicht ein vollautomatisches Aufblasen bzw. Entleeren des Innenzugelement-versteiften-Bretts bzw. der aufblasbaren Struktur. Alternativ oder zusätzlich kann eine Handpumpe vorgesehen sein.

Gemäß noch einer weiteren, bevorzugten Ausführungsform weist das Multifunktionsvorrichtung ferner einen Topper zur Anordnung auf dem Innenzugelement-versteiften-Brett oder der aufblasbaren Struktur auf.

Unter einem Topper oder Topper-Matratze wird im ursprünglichen Sinne eine Matratze verstanden, welche einen oberen Abschluss eines skandinavischen Boxspringbettes bildet. Allgemeiner kann darunter jedoch jede Matratze verstanden werden, welche auf eine andere, in der Regel dickere, Matratze gelegt wird, welche den Schlafkomfort in jeder Liegeposition erhöht und die darunter liegende Matratze schont. Topper sind in der Regel wenige Zentimeter dick.

Hierbei kann der Topper an dem Innenzugelement-versteiften-Brett, insbesondere lösbar, befestigt sein.

Bevorzugt kann der Topper selbstaufblasbar bzw. allgemein aufblasbar sein. Es ist weiter bevorzugt, dass der Topper an eine Absaugeinheit, wie zum Beispiel den oben genannten Kompressor, angebunden bzw. angeschlossen ist. Bevorzugt wird der Topper zusammen mit der aufblasbaren Struktur bzw. dem Innenzugelement-versteiften-Brett entleert. Hierdurch wird vorteilhafterweise erreicht, dass sowohl der Topper als auch das Innenzugelement-versteifte-Brett deutlich an Aufbauhöhe verlieren und somit gut verstaubar sind.

Ausführungsbeispiele der Erfindung sind in den Zeichnungen dargestellt und werden in der nachfolgenden Beschreibung näher erläutert.
Figur 1 zeigt eine Multifunktionsvorrichtung in drei unterschiedlichen Zuständen gemäß einer Ausführungsform der Erfindung; und
Figur 2 zeigt die in Figur 1 dargestellte Multifunktionsvorrichtung in einer dreidimensionalen schematischen Ansicht.

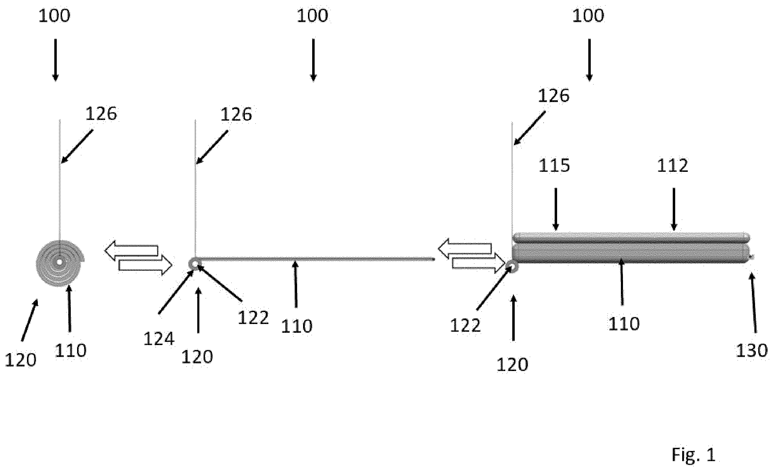

In der linken Teilfigur von Figur 1 ist eine Multifunktionsvorrichtung 100 für ein Campingfahrzeug dargestellt. In dieser Darstellung befindet sich die Multifunktionsvorrichtung 100 im verstauten Zustand. Hierbei befindet sich ein luftleeres Innenzugelement-versteiftes-Brett 110 in aufgewickelter Form auf einer Verstaueinheit 120. Hierbei weist die Verstaueinheit 120 ein Profil 122 mit einem Einrollmechanismus 124 auf, wobei das Profil 122 und der Einrollmechanismus 124 in der mittleren Teilfigur von Figur 1 mit Bezugszeichen bezeichnet sind. Die mittlere Teilfigur von Figur 1 zeigt die Verstaueinheit 120 mit dem vom Profil 122 abgerollten, luftleeren Innenzugelement-versteiften-Brett 110, welches in einer horizontalen Position angeordnet ist. Das Profil 122 der Multifunktionsvorrichtung 100 ist an den beiden Enden des Profils 122 an einer Hebe-Senkvorrichtung 126 aufgehängt. Mithilfe der Hebe-Senkvorrichtung 126 kann die Multifunktionsvorrichtung 100 in der Höhe verstellt werden.

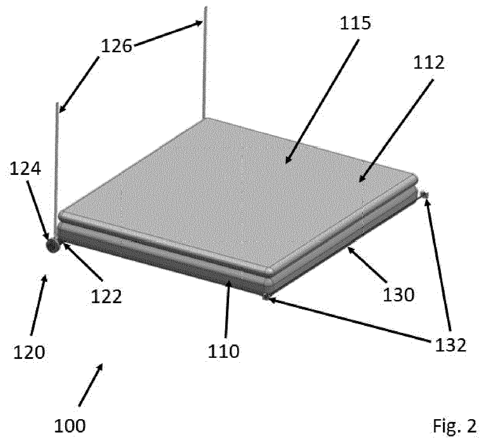

In der rechten Teilfigur von Figur 1 sieht man die Multifunktionsvorrichtung 100 im Nutzzustand mit dem aufgeblasenen Innenzugelement-versteiften-Brett 110, auf dessen Oberseite, welche die Multifunktionsfläche 112 bildet, ein Topper 115 angeordnet ist. Weiterhin sieht man hier eine Halterungsvorrichtung 130 zur Halterung des aufgeblasenen Innenzugelement-versteiften-Bretts 110, welche in Figur 2 besser erkennbar ist.

In Figur 2 erkennt man die Verstaueinheit 120 mit dem Profil 122, welches vorliegend einen Tragebalken bzw. Tragerohr ist. Am vorderen Ende der Verstaueinheit 120 erkennt man den Einrollmechanismus 124, mit dem das luftleere, ausgerollte Innenzugelement-versteifte-Brett 110 wieder auf das Profil 122 der Verstaueinheit 120 aufgewickelt werden kann. Am hinteren Ende des Profils 122 befindet sich ebenfalls ein solcher Einrollmechanismus 124, welcher in der Darstellung der Figur 2 jedoch von dem Innenzugelement-versteifte-Brett 110 verdeckt ist.

Die Halterungsvorrichtung 130 besteht vorliegend aus einer Stange 130, welche an beiden Enden der Stange 130 jeweils eine Vorrichtung 132 zur Arretierung in einer Endposition aufweist. Die Halterungsvorrichtung 130 kann hierbei von unten gestützt werden oder anders befestigt sein.

## Patentansprüche

1. Verstaubare Multifunktionsvorrichtung (100) für ein Campingfahrzeug, aufweisend:
ein aufblasbares Brett (110), welches eine Multifunktionsfläche (112) aufweist; und
eine Verstaueinheit (120) zum Verstauen des Bretts (110) im luftleeren Zustand, wobei die Verstaueinheit (120) ein Profil (122) aufweist,
**dadurch gekennzeichnet,**
**dass** das aufblasbare Brett (110) als aufblasbares Innenzugelement-versteiftes-Brett (110) ausgebildet ist,
**dass** im verstauten Zustand das luftleere Innenzugelement-versteiften-Brett (110) um das Profil (122) gewickelt ist und
**dass** die Verstaueinheit (120) in ein im Inneren des Campingfahrzeugs angeordnetes Möbelstück integriert ist.

2. Multifunktionsvorrichtung (100) nach Anspruch 1,
**dadurch gekennzeichnet,**
**dass** die Multifunktionsfläche (112) der Multifunktionsvorrichtung (100) eine Liegefläche, eine Tischfläche, eine Bettoberfläche, eine Ablagefläche und/oder eine Arbeitsfläche ist.

3. Multifunktionsvorrichtung (100) nach einem der vorangegangen Ansprüche, **ferner aufweisend:**
eine Halterungsvorrichtung (130) zur Halterung des Innenzugelement-versteiften-Bretts (110) im aufgeblasenen Zustand.

4. Multifunktionsvorrichtung (100) nach einem der beiden vorangegangen Ansprüche,
**dadurch gekennzeichnet,**
im Nutzzustand das aufgeblasene Innenzugelement-versteifte-Brett (110) von der Verstauvorrichtung (120) und der Halterungsvorrichtung (130) gehaltert wird.

5. Multifunktionsvorrichtung (100) nach einem der vorangegangen Ansprüche, **dadurch gekennzeichnet,**
**dass** die Verstaueinheit (120) einen Einrollmechanismus (124) aufweist.

6. Multifunktionsvorrichtung (100) nach einem der vorangegangen Ansprüche, **dadurch gekennzeichnet,**
**dass** die Verstaueinheit (120) eine Hebe-Senkvorrichtung (126) aufweist.

7. Multifunktionsvorrichtung (100) nach einem der vorangegangen Ansprüche, **dadurch gekennzeichnet,**
**dass** die Verstaueinheit (120) so ausgeführt und eingerichtet ist, dass die Verstaueinheit (120) im verstauten Zustand mit einem Aufbau des Campingfahrzeugs fest verbunden ist.

8. Multifunktionsvorrichtung (100) nach einem der vorangegangen Ansprüche, **ferner aufweisend:**
einen Kompressor zum Aufblasen und/oder Entleeren des Innenzugelement-versteiften-Bretts (110).

9. Multifunktionsvorrichtung (100) nach einem der vorangegangen Ansprüche, **ferner aufweisend:**
einen Topper (115) zur Anordnung auf dem Innenzugelement-versteiften-Brett (110).

## Claims

1. A storable multifunctional device (100) for a recreational vehicle,
comprising:
an inflatable board (110) having a multifunctional surface (112);
and a storage unit (120) for storing the board (110) when deflated, the storage unit (120) having a profile (122),
**characterised in that**
the inflatable board (110) is designed as an inflatable internal tensile member-stiffened board (110),
that in the stowed state the deflated internal tensile member-stiffened board (110) is wrapped around the profile (122), and
that the storage unit (120) is integrated into a piece of furniture arranged in the interior of the recreational vehicle.

2. Multifunctional device (100) according to claim 1,
**characterised in that**
that the multifunctional surface (112) of the multifunctional device (100) is a lying surface, a table surface, a bed surface, a storage surface and/or a work surface.

3. Multifunctional device (100) according to any one of the preceding claims,
**further comprising**
a holding device (130) for holding the internal tensile member-stiffened board (110) in the inflated state.

4. Multifunctional device (100) according to one of the two preceding claims,
**characterised in that**
in the use state, the inflated internal tensile member-stiffened board (110) is held by the storage unit (120) and the holding device (130).

5. Multifunctional device (100) according to one of the preceding claims,
**characterised in that**
the storage unit (120) has a roll-in mechanism (124).

6. Multifunctional device (100) according to one of the preceding claims,
**characterised in that**
the storage unit (120) comprises a lifting and lowering device (126).

7. Multifunctional device (100) according to one of the preceding claims,
**characterised in that**
the storage unit (120) is designed and arranged in such a way that the storage unit (120) is firmly connected to a body of the recreational vehicle in the stowed state.

8. Multifunctional device (100) according to any one of the preceding claims,
**further comprising:**
a compressor for inflating and/or deflating the internal tensile member-stiffened board (110).

9. Multifunctional device (100) according to any one of the preceding claims,
**further comprising**
a topper (115) for arrangement on the internal tensile member-stiffened board (110).

## Revendications

1. Dispositif (100) multifonction escamotable pour un véhicule de camping, comprenant :
une planche (110) gonflable qui présente une surface (112) multifonction; et
une unité (120) de rangement destiné à ranger la planche (110) à l'état dégonflé, dans lequel l'unité (120) de rangement présente un profilé (122),
**caractérisé en ce que**
la planche (110) gonflable est réalisée comme planche (110) renforcée par élément de traction interne,
à l'état rangé, la planche renforcée par élément de traction interne dégonflée est enroulée autour du profilé (122), et
l'unité (120) de rangement est intégrée dans un meuble agencé dans l'intérieur du véhicule de camping.

2. Dispositif (100) multifonction selon la revendication 1,
**caractérisé en ce que**
la surface (112) multifonction du dispositif (100) multifonction est une surface de couchage, une surface de table, une surface de lit, une surface de dépose et/ou une surface de travail.

3. Dispositif (100) multifonction selon l'une quelconque des revendications précédentes,
comprenant en outre :
un dispositif (130) de support destiné à supporter la planche (110) renforcée par élément de traction interne à l'état gonflé.

4. Dispositif (100) multifonction selon l'une des deux revendications précédentes,
**caractérisé en ce que**
à l'état utilisé, la planche (110) renforcée par élément de traction interne gonflée est supportée par le dispositif (120) de rangement et le dispositif (130) de support.

5. Dispositif (100) multifonction selon l'une des revendications précédentes, **caractérisé en ce que**
l'unité (120) de rangement présente un mécanisme (124) d'enroulement.

6. Dispositif (100) multifonction selon l'une des revendications précédentes, **caractérisé en ce que**
l'unité (120) de rangement présente un mécanisme (126) de levage et d'abaissement.

7. Dispositif (100) multifonction selon l'une des revendications précédentes, **caractérisé en ce que**
l'unité (120) de rangement est conçue et configurée de telle sorte que l'unité (120) de rangement est fermement raccordée, à l'état rangé, à une structure du véhicule de camping.

8. Dispositif (100) multifonction selon l'une des revendications précédentes, comprenant en outre :
un compresseur destiné à gonfler et/ou dégonfler la planche (110) renforcée par élément de traction interne.

9. Dispositif (100) multifonction selon l'une des revendications précédentes, comprenant en outre :
un élément de couverture (115) destiné à être agencé sur la planche (110) renforcée par élément de traction interne.
